# EUROPEAN PATENT SPECIFICATION

(11) **EP 2 831 380 B1**
(45) Date of publication and mention of the grant of the patent: **04.10.2017**
(21) Application number: 13778419.5
(22) Date of filing: 16.01.2013
(51) Int. Cl.: F01D 11/14

(54) **KNIFE EDGE SEAL FOR GAS TURBINE ENGINE**
MESSERKLINGENDICHTUNG FÜR EINEN GASTURBINENMOTOR
JOINT EN LAME DE COUTEAU POUR MOTEUR À TURBINE À GAZ

(30) Priority: 27.03.2012 US 201213430929
(43) Date of publication of application: 04.02.2015
(73) Proprietor: United Technologies Corporation, Farmington, CT 06032 (US)
(72) Inventor: KNAUL, David, A., Glastonbury, CT 06033 (US); MAALOUF, Fadi, S., East Hampton, CT 06424 (US); AIELLO, Nicholas, New Haven, CT 06511 (US); MORGAN, Orenthral, T., East Hartford, CT 06118 (US); MALI, Raji, Shelston, CT 06484 (US)
(74) Representative: Hull, James Edward
(86) International application number: PCT/US2013/021653
(87) International publication number: WO 2013/158168

(56) References cited:
- US-A- 5 314 304
- US-A1- 2010 124 495
- US-A1- 2010 290 898
- US-B2- 7 470 113

## Description

### CROSS-REFERENCE TO RELATED APPLICATION

This application is a PCT patent application claiming priority under 35 USC § 119(e) to US Patent Application Serial No. 13/430,929 filed on March 27, 2012.

### FIELD OF THE DISCLOSURE

The present disclosure relates generally to gas turbine engines, and more particularly relates to knife edge seals of gas turbine engines.

### BACKGROUND OF THE DISCLOSURE

Gas turbine engines are well known and used in a variety of industrial applications including but not limited to providing thrust for modern aircraft, and for land-based power generation. By way of background, a typical gas turbine engine employs a series of sections aligned axially to generate its power or thrust. The first may be a fan which rotates to deliver air to a compressor section. Air is compressed in the compressor section, and delivered downstream to a combustor section. In the combustor, the compressed air is mixed with fuel and ignited, with the products of that combustion then being passed downstream to a turbine section. The turbine and compressor may each include a plurality of intermeshed blades and vanes, with the blades extending radially outward from a central shaft, and the vanes being statically disposed but directed radially inwardly from a stator or static section of the gas turbine engine. The products of combustion cause the turbine rotor blades to rotate and create power or thrust, and also drive the fan and compressor sections.

In order to improve the efficiency of the gas turbine engine, it is desired to prevent any leakage of gasses around the distal ends of the rotor blades and/or stators. In order to do so, knife edge seals are often provided. Typically, a knife edge seal is formed not only at the distal end of each rotor or stator blade, but at the very end of the compressor section at the beginning of the aft hub. Similar knife edge seals are also commonly used at the front, back, and between stages in the turbine. Such knife edge seals rotate against a static portion of the gas turbine engine proximate the aft hub to prevent any leakage of gasses thereby.

While effective, as engine designs continue to be improved, the temperatures and mechanical loads to which the component parts are subjected are continually increased. This is particularly true of the knife edge seals at the aft end of the compressor which are often subjected to gasses in excess of 705 °C [1300 °F] or more. An end result of such high temperatures with current knife edge seal designs is a relatively low fatigue life for the knife edge seals. Accordingly, an improved knife edge seal which is better able to withstand increased temperatures and mechanical loads over a longer period of time is currently needed in the industry.

US 2010/124495 A1 discloses a gas turbine engine having an aft hub with a distal portion having a rim which is accommodated within a shoulder on a rearmost disk of a rotor stack.

### SUMMARY OF THE DISCLOSURE

Viewed from one aspect the present invention provides a seal for a gas turbine engine having the features in accordance with claim 1.

Thus, in accordance with one aspect of the disclosure, a seal for a gas turbine engine is disclosed which comprises an aft hub, and a knife edge seal extending radially outwardly from the aft hub, the knife edge seal being transverse to a center axis of the engine.

The knife edge seal includes a base from which first and second knife edges extend. The knife edge seal further includes a neck between the base and the first and second knife edges, the neck having a reduced thickness relative to the base.

In accordance with another aspect of the disclosure, the knife edge seal extends radially outward and axially forward relative to the gas turbine engine.

In accordance with another aspect of the disclosure, the knife edge seal extends radially outward and axially rearward relative to the gas turbine engine.

In accordance with another aspect of the disclosure, a gas turbine engine is disclosed which may comprise a fan, compressor section downstream of the fan, a combustor section downstream of the compressor section, a turbine section downstream of the combustion section, an aft hub downstream of the compressor section, and a knife edge seal extending radially upwardly from the aft hub, the knife edge seal being transverse to a center axis of the engine.

The knife edge seal includes a base from which first and second knife edges extend and a neck between the base and the first and second knife edges, the neck having a reduced thickness relative to the base.

In accordance with another aspect of the disclosure, the compressor section may include a plurality of blades radially extending between a plurality of vanes, the knife edge seal being transverse to the plurality of blades.

In accordance with another aspect of the disclosure, an aft hub bore extending radially inward from the aft hub, the knife edge seal extending from the aft hub proximate the aft hub bore.

In accordance with another aspect of the disclosure, the knife edge seal extends radially outward and axially forward from the aft hub.

In accordance with another aspect of the disclosure, the knife edge seal extends radially outward and axially rearward from the aft hub.

In accordance with another aspect of the disclosure, a gas turbine engine is disclosed which may comprise a stator, a rotor rotatably mounted within the stator, an aft hub extending rearwardly from the rotor, and a knife edge seal extending from the aft hub at an angle transverse to the rotor.

In accordance with another aspect of the disclosure, the knife edge seal extends radially outward from the aft hub and is angled axially forward toward the rotor.

In accordance with another aspect of the disclosure, the knife edge seal extends radially outward from the aft hub and is angled axially rearward away from the rotor.

In accordance with another aspect of the disclosure, an aft hub bore radially inwardly extends from the aft hub and parallel to the rotor, the knife edge seal extending from the aft hub proximate the aft hub bore.

In accordance with another aspect of the disclosure, the rotor includes a plurality of radially directed blades and the knife edge seal extends relative to the plurality of blades at an angle of less than 90° and more than 0°.

These and other aspects and features of the disclosure will become more readily apparent upon reading the following detailed description when taken into conjunction with the accompanying drawings.

### BRIEF DESCRIPTION OF THE DRAWINGS

FIG. 1 is a cross-sectional view through a gas turbine engine constructed in accordance with the teachings of the disclosures;
FIG. 2 is a sectional view of an aft hub and knife edge seal constructed in accordance with the teachings of the disclosures;
FIG. 3 is a perspective view of the aft hub of FIG. 2;
FIG. 4 is an enlarged partial perspective view of the knife edge seal of FIG. 3;
FIG. 5 is a sectional view of the aft hub and knife edge seal with the knife edge seal arm extending radially outwardly and axially forwardly; and
FIG. 6 is a sectional view similar in scope to FIG. 5, but showing an alternative embodiment with a radially outwardly and axially rearwardly extending knife edge seal arm.

While the following detailed description will be given with respect to certain illustrative embodiments, it is to be understood that the scope of the disclosure should not be limited to such embodiments, but that the same are provided simply for enablement and best mode purposes. The breadth and spirit of the disclosure is broader than the disclosed embodiments and encompassed within the claims appended hereto.

### DETAILED DESCRIPTION

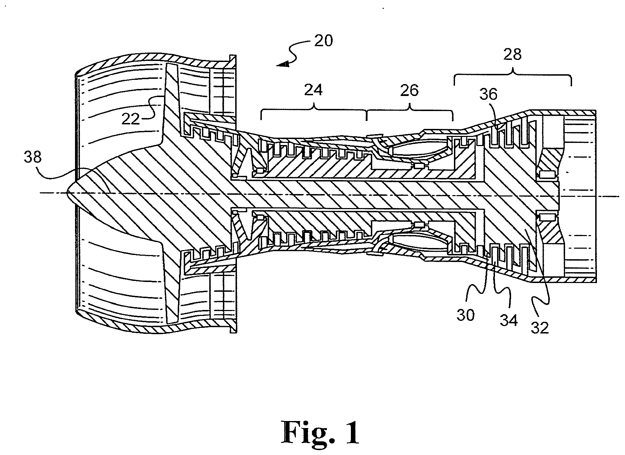

Referring now to the drawings, with specific reference to FIG. 1, a gas turbine engine constructed in accordance with the teachings of the disclosure is generally referred to by reference numeral 20. Such a gas turbine engine 20 can be used for any number of different applications including, but not limited to, aircraft thrust and land-based power generation. Moreover, it is to be understood that the sectional view provided in FIG. 1 is included simply to provide a basic understanding of the various sections in a gas turbine engine, and not to limit the invention thereto. The present disclosure extends to all types of gas turbine engines used in all types of applications.

With reference again to FIG. 1, the gas turbine engine 20 is shown to begin with a fan 22 which draws in ambient air and directs same to a compressor section 24. The incoming air is greatly compressed by the compressor section 24 and directed to a combustor section 26 where it is mixed with fuel and combusted. The products of that combustion, in the form of very hot and expanding gases, are directed to a turbine section 28 shown to be downstream of the combustor section 26. The turbine section 28 and/or compressor section 24 may be comprised of a plurality of blades 30 radially extending from a disc 32 which are intermeshed with a plurality of vanes 34 radially extending inwardly from a static section or stator 36. In so doing, it can be seen that the turbine section 28, compressor section 24 and fan 22 all form a rotor 37 adapted to revolve around a central engine axis 38 within the stator 36.

As indicated above, the products of combustion consisting of the extremely hot combustion gases, often in excess of 1300°F or more, cause the turbine section 28 to rotate and drive the fan 22 and compressor section 24. In addition, upon exhausting from the gas turbine engine 20, thrust is generated so as to propel the aircraft if used in aerospace applications. While effective, those high temperatures and increased mechanical loads necessarily have an impact on the life expectancy of the various component parts of the engine 20. This is particularly true in next generation engines which, in order to provide even greater power and thrust, often result in even higher gas temperatures. One area of the engine 20 which is subjected to such high temperatures and loads and which is currently prone to fatigue due to such thermal stresses, is the knife edge seal 40 provided downstream of the compressor section 24. For frame of reference, it is also important to understand that such engines 20 are required to not only handle such high temperatures, but do so over a long life cycle, e.g., many thousands of cycles (aircraft flights).

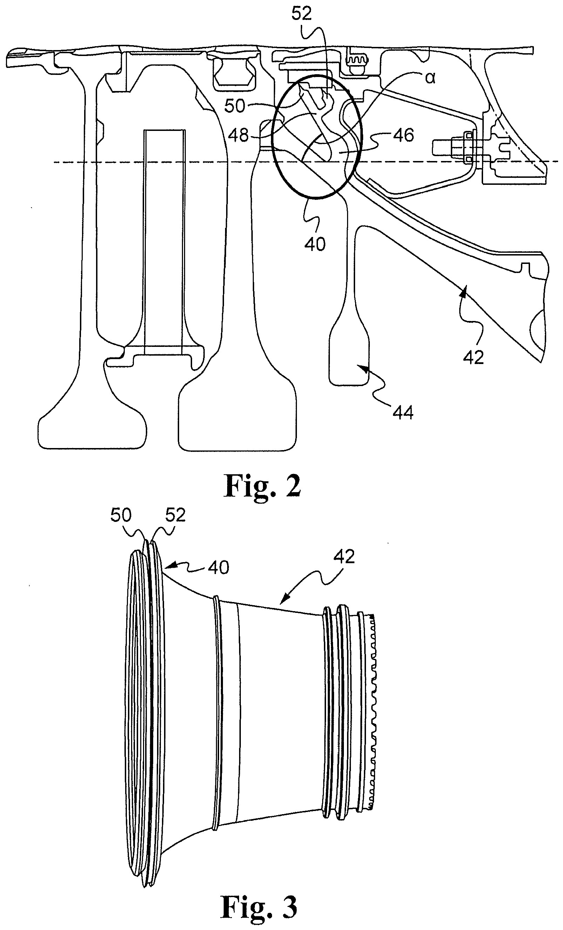

Referring now to FIG. 2, the knife edge seal 40 may extend radially outwardly from an aft hub 42 and terminate proximate the stator 36 so as to prevent leakage of any gases therethrough which would otherwise undermine the efficiency of the engine 20. As will be noted, the aft hub 42 extends radially inwardly from the last rotor blade 30 of the compressor section 24 at an angle transverse to the angular disposition of the rotor blade 30.

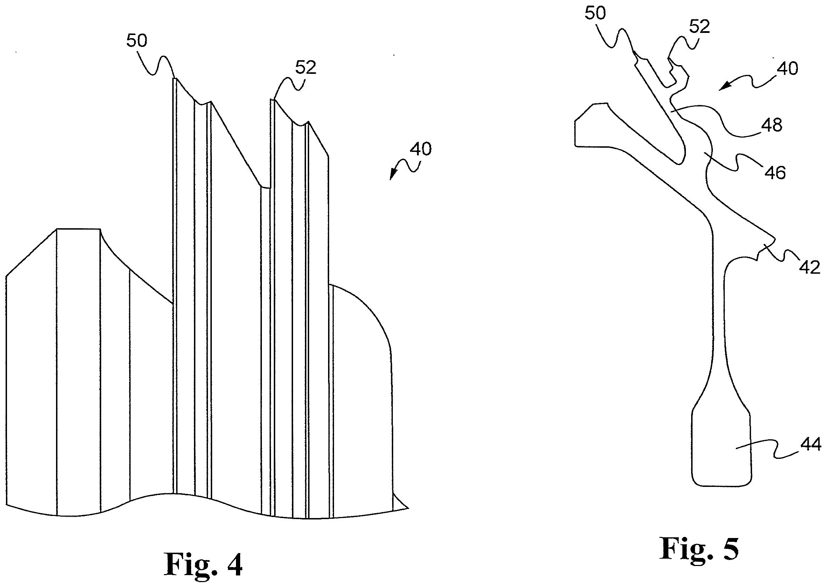

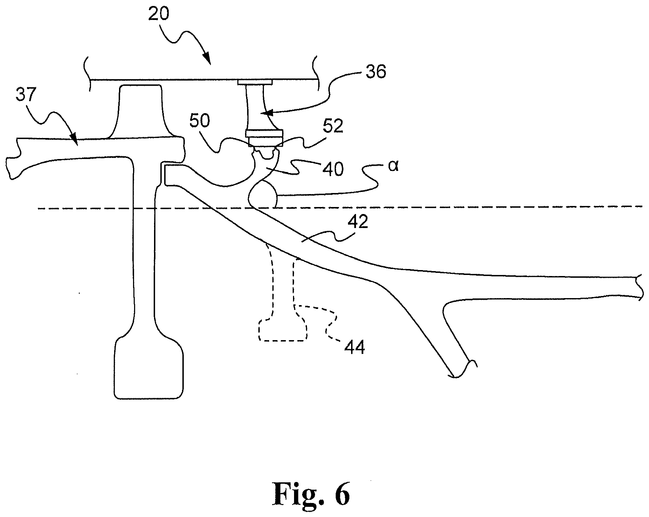

However, it will also be noted that the knife edge seal 40, while extending radially outward from the aft hub 42, does not extend in a manner parallel to the rotor blades 30 but rather at an angle α transverse to the engine axis 38, the aft hub 42, and the rotor blades 30. More specifically, the knife edge seal 40, in one embodiment, as shown in FIG. 5 extends radially outward and axially forward toward the rotor blades 30 at an angle α less than 90° and more than 0° relative to the engine axis 38. Other angles are certainly possible with the overall importance of this angular disposition being discussed in further detail herein. In an alternative embodiment shown in FIG. 6, the knife edge seal 40 may also extend from the aft hub 42 and the angle α, but do so in a radially outward and axially rearward fashion.

Referring again to FIG. 5, the aft hub 42 and knife edge seal 40 are shown in greater detail. In addition, as shown therein, an aft hub bore 44 may extend radially inward from the aft hub 42. Moreover, the knife edge seal 40 may extend outwardly from the aft hub 42 proximate the aft hub bore 44, but other arrangements with or without the aft hub bore 44 are certainly possible. In some embodiments, the aft hub bore is not included at all, which reduced thermal gradient induced stress. The knife edge seal 40 may include a base 46 from which a neck 48 outwardly extends, with first and second knife edges 50 and 52 in turn outwardly extending from the neck 48. The first and second knife edges 50 and 52 are shown to be parallel in the depicted embodiment, but it is to be understood that other angular orientations are possible and encompassed with the present invention as well. Moreover, while only two knife edges 50 and 52 are shown, a greater or lesser number of knife edges are certainly possible as well.

The specific shape and relative dimension of the aforementioned components may also be of importance. As will be noted, the base 46 is substantially greater in width than the neck 48. The inventors have found that by doing so, the low cycle fatigue (LCF) life of the knife edge seal is maintained while improving the ability of the knife edge seal 40 to withstand such high temperatures, referred to herein as improved thermal mechanical fatigue (TMF) life. This life is also aided by manufacturing the knife edge seal from suitable temperature resistant materials such as, but not limited to, nickel alloy with an alumina coating.

Not only does the added material provided at the base 46 help to balance TMF versus LCF, but by angling the knife edge seal 40 forwardly or rearward toward or away from the rotor 30 and at an angle off of vertical, the influence of the mechanical centrifugal loads adds tensile stress at the knife edges at an important mission point. In other words, if the knife edge seals 40 were to be provided at a vertical disposition, as the engine components rotated, the centrifugal load would have relatively little impact or ability to move the knife edges toward the stator 36 or vane 34. However, by cantilevering the knife edge seals 40 at the angle α off vertical, when the gas turbine engine components begin to rotate, the resulting centrifugal load causes the knife edges 50 and 52 to rotate outwardly, and thus come into contact with the vane 34 or stator 36. More specifically, an abraidable rub strip (not shown) is typically mounted to the inner diameter of stator 36 or vane 34. In so doing, a better seal is achieved. In so angling the knife edge seal 40, the knife edge aerodynamically blocks flow, thus increasing efficiency of the knife edge.

In addition to the above, by providing the knife edge seals off of vertical with the aforementioned design, it decouples the thermal growth of the knife edges from the aft hub bore or adjacent disc bore, thus reducing the compressive thermal stress that drives TMF life. The reduced thermal stress and increased mechanical tensile strength combine to result in a significantly improved TMF life while maintaining adequate LCF life. Not only is this a significant improvement over prior art knife edge designs, but also runs counter to the traditional LCF fix of simply adding more material. More specifically, the inventors have found that adding more material to this particular situation would actually make the problem worse by increasing the thermal mass of the resulting structure and thus increasing the resulting thermal gradient induced stress. The present disclosure therefore manages to balance LCF and TMF without adding additional material and thermal mass.

Finally, by angling and adjusting the length of the knife edge seal arm, the stiffness is such that under conditions of high centrifugal speed and high thermal gradients, particularly at acceleration from idle to high power, stress is reduced. The thermal gradients tend to generate compressive stress under this condition. Centrifugal loads generate tensile stress. The angled arm results in a method to let the stresses partially cancel out, thus reducing the net stress. Moreover, the particle angle α chosen can be adjusted to optimize the mix of centrifugal stress to offset the thermal stress.

### INDUSTRIAL APPLICABILITY

From the foregoing, it can be seen that the present disclosure sets forth an improved seal for a gas turbine engine and a gas turbine engine employing such a seal. Such devices can find industrial applicability in many situations including, but not limited to aircraft engines for thrust and auxiliary power, and as well as land-based power generation. The engine sets forth a knife edge seal for a gas turbine engine which is better able to withstand the extremely high temperatures and mechanical loads to which gas turbine engine components are now subjected and will be so subjected in the future. By moving the knife edge seal to the aft hub and cantilevering its angle off of vertical, the thermal and mechanical loads are balanced and thus thermal mechanical fatigue life is improved while low cycle fatigue is maintained.

## Claims

1. A seal for a gas turbine engine (20) comprising:
an aft hub (42); and
a knife edge seal (40) extending radially outward from said aft hub (42) and terminating proximate a stator (36) when in place, the knife edge seal (40) being transverse to a center axis (38) of the engine, the knife edge seal (40) including a base (46) from which a neck (48) outwardly extends, with first and second knife edges (50,52) outwardly extending from the neck (48), the neck (48) having a reduced thickness relative to the base (46).

2. The seal of claim 1, wherein the knife edge seal (40) extends radially outward and axially forward relative to the gas turbine engine.

3. The seal of claim 1 or 2, wherein the knife edge seal (40) extends radially outward and axially rearward relative to the gas turbine engine.

4. The seal of any preceding claim, wherein the knife edge seal (40) is manufactured from nickel alloy with an alumina coating.

5. The seal of any preceding claim, wherein the knife edge seal (40) extends from the aft hub (42) at an angle of less than 90°.

6. A gas turbine engine (20), comprising;
a fan (22);
a compressor section (24) downstream of the fan (22);
a combustor section (26) downstream of the compressor section (24);
a turbine section (28) downstream of the combustor section (26); and
the seal of any preceding claim;
wherein the turbine section (28) and/or the compressor section (24) are comprised of a plurality of blades (30) radially extending from a disc (32) which are intermeshed with a plurality of vanes (34) radially extending inwardly from the stator (36).

## Patentansprüche

1. Dichtung für einen Gasturbinenmotor (20), umfassend:
eine hintere Nabe (42); und
eine Messerklingendichtung (40), die sich von der hinteren Nabe (42) radial nach außen erstreckt und nahe einem Stator (36) endet, wenn sie in ihrer Position ist,
wobei die Messerklingendichtung (40) quer zu einer Mittelachse (38) des Motors ist, wobei die Messerklingendichtung (40) eine Basis (46) beinhaltet, von der sich ein Hals (48) nach außen erstreckt, wobei sich die erste und zweite Messerkante (50, 52) von dem Hals (48) nach außen erstrecken, wobei der Hals (48) bezogen auf die Basis (46) eine reduzierte Dicke aufweist.

2. Dichtung nach Anspruch 1, wobei sich die Messerklingendichtung (40) bezogen auf den Gasturbinenmotor radial nach außen und axial nach vorne erstreckt.

3. Dichtung nach Anspruch 1 oder 2, wobei sich die Messerklingendichtung (40) bezogen auf den Gasturbinenmotor radial nach außen und axial nach hinten erstreckt.

4. Dichtung nach einem der vorhergehenden Ansprüche, wobei die Messerklingendichtung (40) aus einer Nickellegierung mit einer Aluminiumbeschichtung hergestellt ist.

5. Dichtung nach einem der vorhergehenden Ansprüche, wobei sich die Messerklingendichtung (40) von der hinteren Nabe (42) in einem Winkel von unter 90° erstreckt.

6. Gasturbinenmotor (20), umfassend:
eine Lüftereinheit (22);
einen der Lüftereinheit (22) nachgelagerten Verdichterabschnitt (24);
einen dem Verdichterabschnitt (24) nachgelagerten Brennkammerabschnitt (26);
einen dem Brennkammerabschnitt (26) nachgelagerten Turbinenabschnitt (28); und
die Dichtung nach einem der vorhergehenden Ansprüche;
wobei der Turbinenabschnitt (28) und/oder der Verdichterabschnitt (24) aus einer Vielzahl von Laufschaufeln (30) bestehen/besteht, die sich radial von einer Scheibe (32) erstreckt und die mit einer Vielzahl von Leitschaufeln (34) ineinandergreift, die sich von dem Stator (36) radial nach innen erstreckt.

## Revendications

1. Joint pour un moteur à turbine à gaz (20) comprenant :
un moyeu arrière (42) ; et
un joint en lame de couteau (40) s'étendant radialement vers l'extérieur depuis ledit moyeu arrière (42) et se terminant à proximité d'un stator (36) lorsqu'il est place,
le joint en lame de couteau (40) étant transversal à un axe central (38) du moteur, le joint en lame de couteau (40) incluant une base (46), de laquelle un collet (48) s'étend vers l'extérieur, avec des première et seconde lames de couteau (50, 52) s'étendant vers l'extérieur depuis le collet (48), le collet (48) présentant une épaisseur réduite par rapport à la base (46).

2. Joint selon la revendication 1, dans lequel le joint en lame de couteau (40) s'étend radialement vers l'extérieur et axialement vers l'avant par rapport au moteur à turbine à gaz.

3. Joint selon la revendication 1 ou 2, dans lequel le joint en lame de couteau (40) s'étend radialement vers l'extérieur et axialement vers l'arrière par rapport au moteur à turbine à gaz.

4. Joint selon une quelconque revendication précédente, dans lequel le joint en lame de couteau (40) est fabriqué en alliage de nickel avec un revêtement d'alumine.

5. Joint selon une quelconque revendication précédente, dans lequel le joint en lame de couteau (40) s'étend depuis le moyeu arrière (42) à un angle inférieur à 90°.

6. Moteur à turbine à gaz (20) comprenant :
un ventilateur (22) ;
une section de compresseur (24) en aval du ventilateur (22) ;
une section de chambre de combustion (26) en aval de la section de compresseur (24) ;
une section de turbine (28) en aval de la section de chambre de combustion (26) ; et
le joint selon une quelconque revendication précédente ;
dans lequel la section de turbine (28) et/ou la section de compresseur (24) sont composées d'une pluralité de pales (30) s'étendant radialement depuis un disque (32) qui est entremêlée avec une pluralité d'aubes (34) s'étendant radialement vers l'intérieur depuis le stator (36).
